Europäisches Patentamt

European Patent Office

Office européen des brevets

(11) Veröffentlichungsnummer: **0 479 284 A2**

## EUROPÄISCHE PATENTANMELDUNG

(21) Anmeldenummer: **91116858.1**

(22) Anmeldetag: **02.10.91**

(51) Int. Cl.⁵: **G06K 9/00**

(30) Priorität: **04.10.90 DE 4031404**

(43) Veröffentlichungstag der Anmeldung:
**08.04.92 Patentblatt 92/15**

(84) Benannte Vertragsstaaten:
**ES FR GB IT**

(71) Anmelder: **ESG Elektronik-System-Gesellschaft mbH**
**Vogelweideplatz 9**
**W-8000 München 80(DE)**

(72) Erfinder: **Preisenberger, Markus, Dr.**
**Hunkelestrasse 63**
**W-8000 München 71(DE)**

(74) Vertreter: **Prechtel, Jörg, Dipl.-Phys. Dr. et al**
**Patentanwälte H. Weickmann, Dr. K. Fincke F.A. Weickmann, B. Huber Dr. H. Liska, Dr. J. Prechtel Kopernikusstrasse 9 Postfach 86 08 20**
**W-8000 München 86(DE)**

(54) **Verfahren zur Identifizierung von Zeichenketten.**

(57) Es wird ein Verfahren zur Identifizierung von aus standardisierten Zeichen zusammengesetzten Zeichenketten vorgeschlagen, welches folgende Schritte umfaßt:

a) digitale Erfassung eines Ausgangsbildes, welches die Zeichenkette enthält;

b) Bearbeitung des Ausgangsbildes mit Hilfe von kontrastverstärkenden Operationen;

c) Ermitteln von Bildbereichen, die jeweils nur ein einzelnes Zeichen enthalten;

d) Bestimmung von Inhaltswerten, welche den in den einzelnen Bildbereichen enthaltenen Zeichen entsprechen; und

e) Aufbau einer Inhaltswertekette gemäß der Position der zu den Inhaltswerten gehörenden Bildbereichen innerhalb des Bildes.

Fig.1

EP 0 479 284 A2

Die Erfindung betrifft ein Verfahren zur Identifizierung von aus standardisierten Zeichen zusammengesetzten Zeichenketten.

Derartige Verfahren haben in den letzten Jahren auf sehr vielen Gebieten eine immer breitere Anwendung gefunden. So können bspw. in gedruckter Form vorliegende Texte mittels eines sogenannten "Scanners" in Textdateien umgewandelt werden, die dann mit Hilfe eines Textverarbeitungsprogramms auf einem Computer weiterbearbeitet werden können. Hierzu ist es nötig, eine Abbildung des Textes zu digitalisieren, die Zeichen, aus denen der Text zusammengesetzt ist, zu klassifizieren und anschließend den Text in einer vom Computer weiterverarbeitbaren Form an den Computer zu übergeben.

Bei den bekannten Verfahren ist es erforderlich, das den Text enthaltende Blatt Papier in einer vorgegebenen Position auf die Arbeitsfläche des Scanners aufzulegen. Ähnlich wie bei einem Photokopiergerät wird das Blatt Papier nach einem von einem Bediener eingegebenen Startimpuls von einer im Scanner eingebauten Lampe beleuchtet und von einer Detektorleiste abgerastert. Das Ergebnis ist ein kontrastreiches Pixelbild des Textes. Für eine zufriedenstellende Funktion des Scanners ist die Einhaltung der beschriebenen, optimalen Arbeitsbedingungen unabdingbar. Bei zahlreichen Anwendungen, wie bspw. dem automatischen Lesen von Kfz-Kennzeichen, sind derartige optimale Arbeitsbedingungen jedoch nicht gegeben. So können beispielsweise eine ungünstige Beleuchtung infolge schlechter Witterung oder einsetzender Dämmerung oder auch eine Verschmutzung der Kraftfahrzeug-Kennzeichen dazu führen, daß die Abbildung der Kraftfahrzeug-Kennzeichen keinen zur Identifizierung ausreichenden Kontrast mehr aufweist.

Die Aufgabe der Erfindung liegt darin, ein Verfahren der eingangs genannten Art bereitzustellen, welches sich selbst bei ungünstigen Bedingungen, wie z.B. schlechter Beleuchtung, durch eine hohe Zeichenklassifikationssicherheit auszeichnet.

Die Aufgabe wird durch ein Verfahren zur Identifizierung von aus standardisierten Zeichen zusammengesetzten Zeichenketten gelöst, welches folgende Schritte umfaßt:

a) digitale Erfassung eines Ausgangsbildes, welches die Zeichenkette enthält;

b) Bearbeitung des Ausgangsbildes mit Hilfe von kontrastverstärkenden Operationen;

c) Ermitteln von Bildbereichen, die jeweils nur ein einzelnes Zeichen enthalten;

d) Bestimmung von Inhaltswerten, welche den in den einzelnen Bildbereichen enthaltenen Zeichen entsprechen; und

e) Aufbau einer Inhaltswertekette gemäß der Position der zu den Inhaltswerten gehörenden Bildbereiche innerhalb des Bildes.

Um ein eventuell im Bild vorhandenes Rauschen unterdrücken zu können, wird vorgeschlagen, daß im Schritt b) das Ausgangsbild gefiltert wird, vorzugsweise mittels Median-Filteroperation.

Der bspw. durch schlechte Beleuchtung verschlechterte Kontrast des Bildes kann dadurch verbessert werden, daß im Schritt b) das ggf. gefilterte Ausgangsbild wenigstens einer, weiter unten noch ausführlicher beschriebenen Dilatations-Operation unterzogen wird, bei der im Falle dunkler Zeichen auf hellem Hintergrund hellere Bildbereiche zuungunsten dunklerer Bildbereiche vergrößert werden und im Falle heller Zeichen auf dunklem Grund dunklere Bildbereiche zuungunsten hellerer Bildbereiche vergrößert werden und die Anzahl der Dilatations-Operationen derart festgelegt ist, daß nach Durchführung dieser Dilatations-Operationen die Zeichen im dilatierten Bild gerade verschwunden sind, daß das dilatierte Bild wenigstens einer, ebenfalls weiter unten noch eingehend beschriebenen Erosions-Operation unterzogen wird, bei der die bei der Dilatations-Operation verkleinerten Bildbereiche zuungunsten der bei der Dilatations-Operation vergrößerten Bildbereiche vergrößert werden und die Anzahl der Erosions-Operationen derart festgelegt ist, daß im dilatierten Bild übriggebliebene Bildelemente nach den Erosions-Operationen im erodierten Bild eine Ausdehnung aufweisen, die ihrer Ausdehnung im Ausgangsbild entspricht, und daß zur Bildung eines Subtraktions-Bildes in einer Subtraktions-Operation das erodierte Bild vom Ausgangsbild abgezogen wird. Hierdurch werden in dem zu bearbeitenden Bild Strukturen gelöscht, deren Dimension größer ist als die Vergrößerung der durch die Dilatations-Operationen erweiterten Bildbereiche. Der Kontrast kleinerer Strukturen wird durch die beschriebenen Operationen stark abgeschwächt, sofern sie nicht von vorneherein maximalen Kontrast haben. Das Verfahren eignet sich daher besonders gut in den Fällen, in denen der lokale Kontrast im Bereich der Zeichenkette größer ist als in der Umgebung der Zeichenkette.

Um anstelle eines Grauwert-Bildes ein Bild mit maximalem Kontrast für die weitere Verarbeitung bereitstellen zu können, wird vorgeschlagen, daß im Schritt b) eine Grauwert-Häufigkeitsverteilung des zu bearbeitenden Bildes bestimmt wird, daß ein Grauwert-Schwellwert in Abhängigkeit von der bestimmten Grauwert-Häufigkeitsverteilung festgelegt wird, daß aus dem zu bearbeitenden Bild ein binäres Bild erhalten wird, indem denjenigen Bildpunkten des zu bearbeitenden Bildes mit Grauwert unterhalb des Schwellwerts der Binärwert "0" und denjenigen Bildpunkten des zu bearbeitenden Bildes mit Grauwert oberhalb des Schwellwerts der Binärwert "1" zugeordnet wird. Ein weiterer Vorteil der Erstellung eines binären Bildes liegt darin, daß hierdurch die in den weiteren Verarbeitungsschritten zu bearbeitende Datenmenge erheblich reduziert wird, was die Verarbeitungsgeschwindigkeit erhöht.

Hierbei ist es bevorzugt, daß als Grauwert-Schwellwert der einem relativen Häufigkeitsminimum der Grauwert-Häufigkeitsverteilung zugeordnete Grauwert bestimmt wird.

Hierbei ist es besonders bevorzugt, daß als das den Grauwert-Schwellwert festlegende relative Häufigkeitsminimum der Grauwert-Häufigkeitsverteilung das kleinste relative Häufigkeitsminimum zwischen zwei Hauptmaxima der Grauwert-Häufigkeitsverteilung bestimmt wird.

Um die einzelnen Zeichen der im Ausgangsbild enthaltenen Zeichenkette voneinander trennen zu können, wird vorgeschlagen, daß im Schritt c) der Verlauf der Konturlinie jedes Bildelements im zu bearbeitenden Bild festgestellt wird.

Hierbei ist es besonders bevorzugt, daß für jedes Bildelement ein, insbesondere rechteckiges, Bildfeld vorgegebener Orientierung und mit minimaler Fläche bestimmt wird, in welchem die jeweilige Konturlinie vollständig liegt.

Um von vorneherein Bildelemente von der Klassifikation ausschließen zu können, deren Ausdehnung kleiner oder größer ist als die der üblicherweise auftretenden Zeichen, ist vorgesehen, daß ein maximaler und ein minimaler Bildfeld-Dimensionsgrenzwert festgelegt werden und daß Bildelemente mit Bildfeld-Dimensionswerten über dem maximalen oder unter dem minimalen Bildfeld-Dimensionsgrenzwert nicht weiterverarbeitet werden.

Um den Einfluß der jeweiligen Beobachtungsperspektive bei der Aufnahme des Ausgangsbildes auf die Größe der zu klassifizierenden Zeichen weitestgehend kompensieren zu können, wird vorgeschlagen, daß man die Bildfelder samt Bildelementen derart vergrößert oder verkleinert, daß der Wert einer vorgegebenen Dimension, vorzugsweise Höhe des Bildfelds, einem entsprechenden Wert eines Standardfeldes entspricht und eine Auflösung der Bildfelder in Bildpunkte entsprechend der Verkleinerung oder Vergrößerung auf eine vorgegebene Auflösung gebracht wird, wobei man vorzugsweise das Bildelement im Standardfeld an einer vorbestimmten Position, insbesondere rechts- oder linksbündig, anordnet.

Zur Klassifikation ist es besonders bevorzugt, daß man im Schritt d) ein neuronales Netzwerk einsetzt, welches dadurch an die zu verarbeitenden Zeichenketten angepaßt wird, daß man der Reihe nach eine Vielzahl von bekannten Zeichenketten nach Durchführung der Schritte a) bis c) dem neuronalen Netzwerk als Eingangssignalmuster eingibt und gleichzeitig dem neuronalen Netzwerk die jeweiligen Inhaltswerte als Soll-Ausgangssignalmuster eingibt. Bei üblichen Klassifikationsverfahren erfolgt die Identifizierung der Zeichen bspw. anhand geometrischer Merkmale der Zeichen. Darüber hinaus werden bestimmte Zeichensätze fest vorgegeben. Eine Anpassung üblicher Klassifikationssysteme bspw. an neue Zeichen, neue Schriftbreite oder eine gänzlich neue Beobachtungsgeometrie ist daher nicht auf einfache Weise möglich. Der Einsatz neuronaler Netzwerke zur Klassifikation der Zeichen hat demgegenüber den Vorteil, daß die üblicherweise auftretenden Zeichen dem System in einer Trainingsphase "beigebracht" werden können. Hierdurch ist in besonders einfacher Weise eine Anpassung des Systems an eine neue Beobachtungsgeometrie oder auch neu auftretende Zeichen möglich.

In Weiterbildung der Erfindung wird vorgeschlagen, daß als neuronales Netzwerk ein "backpropagation"-Netzwerk eingesetzt wird.

Besonders vorteilhaft ist die Anwendung des Verfahrens zur Identifizierung von Kraftfahrzeug-Kennzeichen, da infolge der sich häufig ändernden Witterungs- und Sichtbedingungen nur ein so flexibles Identifizierungssystem, wie es die Erfindung bereitstellt, die nötige Klassifizierungssicherheit bieten kann.

Aufgrund seiner kurzen Identifizierungszeit kann das Verfahren in einem Abfertigungssystem für Parkhäuser eingesetzt wird.

Zur Durchführung des Verfahrens dient eine Vorrichtung umfassend

A) ein Bildaufnahmegerät, vorzugsweise Video-Kamera;

B) eine Bildverarbeitungseinheit;

C) eine Zeichenklassifizierungseinheit und

D) eine Kontrolleinheit zur Steuerung des Bildaufnahmegeräts, der Bildverarbeitungseinheit und der Zeichenklassifikationseinheit.

Eine derartige Trennung der Vorrichtung in Einzelkomponenten ermöglicht eine hohe Identifizierungsgeschwindigkeit, da beispielsweise die Bildverarbeitungseinheit bereits für eine zweite Zeichenkette die Schritte b) und c) des Verfahrens durchführen kann, während die Zeichenklassifikationseinheit noch die erste Zeichenkette klassifiziert.

In Weiterbildung der Erfindung wird vorgeschlagen, daß das Bildaufnahmegerät eine CCD-Kamera ist.

Eine hohe Flexibilität der Vorrichtung gegenüber den zu identifizierenden Zeichen und den äußeren Randbedingungen wird dadurch erreicht, daß die Zeichenklassifizierungseinheit ein neuronales Netzwerk umfaßt.

Um eine Überwachung der Vorrichtung durch einen Bediener zu ermöglichen, wird ein an das Bildaufnahmegerät und/oder die Kontrolleinheit angeschlossener Monitor vorgeschlagen.

Aus der DE-PS 37 15 314 ist eine computergesteuerte Abfertigungsanlage für Parkhäuser oder Parkplätze bekannt. Bei dieser Abfertigungsanlage wird auf einen von einer Induktionsschleife bei der Einfahrt eines Fahrzeugs in das Parkhaus erzeugten Impuls hin ein Bild der Frontpartie des Fahrzeugs von einer Videokamera an ein Schriftzeichenlesegerät übergeben. Das Schriftzeichenlesegerät ermittelt in nicht angegebener Weise aus diesem Bild das polizeiliche Kennzeichen des Fahrzeugs. Ein Computer ordnet das Kennzeichen der Einfahrtszeit zu und speichert diese Daten. Vor der Ausfahrt aus dem Parkhaus ist an einem Kassenautomaten das Kraftfahrzeug-Kennzeichen einzugeben und eine der Parkdauer entsprechende Parkgebühr zu entrichten. Hierauf wird das Kraftfahrzeug-Kennzeichen vom Computer zur Ausfahrt freigegeben. Bei der Ausfahrt wird auf einen entsprechenden Impuls wiederum ein Videobild der Fahrzeugfront dem Schriftzeichenlesegerät übermittelt, welches hieraus das Kennzeichen bestimmt. Ist das Kraftfahrzeug-Kennzeichen freigegeben, so öffnet sich automatisch eine die Ausfahrt versperrende Schranke. Für den Parkhausbenutzer entfällt somit das Entnehmen bzw. Wiedereinführen eines Parkscheins bei der Einfahrt in das bzw. Ausfahrt aus dem Parkhaus.

Das erfindungsgemäße Verfahren läßt sich in hervorragender Weise zur Identifizierung der Kraftfahrzeug-Kennzeichen in dem beschriebenen Schriftzeichenlesegerät einsetzen.

Die Erfindung wird im folgenden anhand der Zeichnungen am Beispiel der Identifizierung von Kraftfahrzeug-Kennzeichen näher erläutert. Es zeigen:

Figur 1    ein Diagramm, welches die Hauptschritte des Identifizierungsverfahrens zusammenfaßt;

Figur 2    ein Diagramm, welches den Schritt der Bildvorverarbeitung näher erläutert und die Auswirkungen der einzelnen Unterschritte auf das zu bearbeitende Bild darstellt;

Figur 3    ein Diagramm analog Fig. 2, jedoch für den Schritt der Segmentierung des Bildes;

Figur 4    zwei Blockdiagramme, welche den Einsatz eines neuronalen Netzes im Verfahrensschritt der Bestimmung der Inhaltswerte näher erläutert; Figur 4a zeigt hierbei den Einsatz des neuronalen Netzes zur Identifizierung von Zeichen; Figur 4b zeigt den Einsatz des neuronalen Netzes während der Trainingsphase;

Figur 5    Darstellungen, die die Funktion der Dilatations- bzw. Erosions-Operationen näher erläutern; Figur 5a zeigt hierbei die Arbeitsweise dieser Operationen; Figur 5b zeigt die Auswirkung einer Dilatations-Operation auf einen Bildausschnitt; Figur 5c zeigt den in den Figuren 5a und 5b verwendeten Grauwert-Code;

Figur 6    den schematischen Aufbau einer Vorrichtung zur Identifizierung von Zeichenketten.

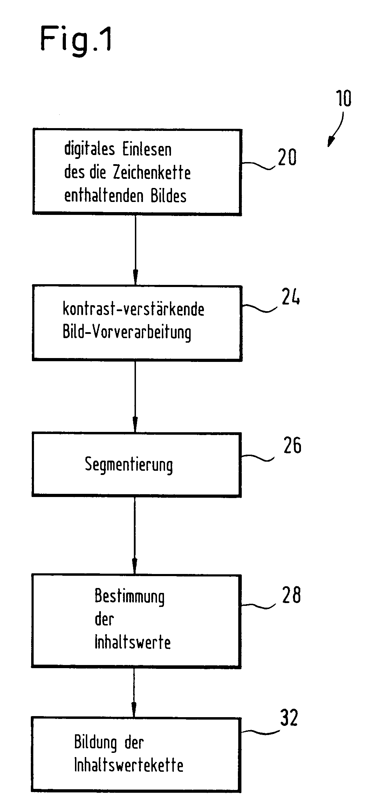

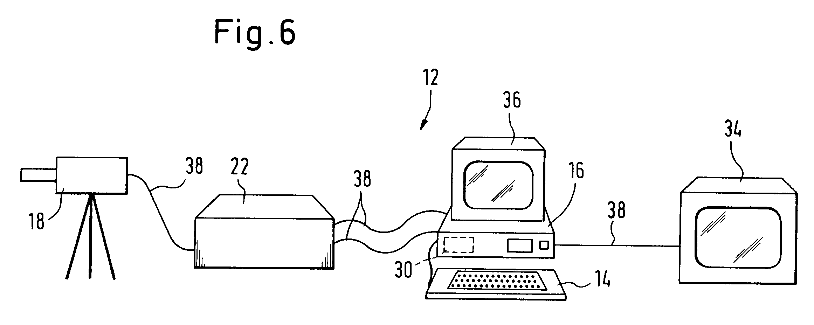

Die Hauptverfahrensschritte des im folgenden mit 10 bezeichneten Verfahrens zur Identifizierung von aus standardisierten Zeichen zusammengesetzten Zeichenketten sind in Fig. 1 zusammengefaßt. Fig. 6 zeigt eine Vorrichtung 12 zur Durchführung des Verfahrens 10. Auf einen Startimpuls, der von einem nicht dargestellten Impulsgeber, bspw. Induktionsschleife, oder von einem Bediener über die Tastatur 14 eines die Vorrichtung 12 steuernden Personal Computer gegeben wird, wird ein von einer Videokamera 18 stammendes Bild einer Frontpartie eines Kraftfahrzeugs in einem Verfahrensschritt 20 digitalisiert und in eine Bildvorverarbeitungseinheit 22 eingelesen.

Das digitalisierte Bild ist aus einer Vielzahl von Bildpunkten zusammengesetzt, denen im Falle einer Schwarz/Weiß-Videoaufnahme jeweils ein Grauwert zugeordnet ist. Schwarzen Bildpunkten wird beispielsweise der Grauwert "0" und weißen Bildpunkten beispielsweise der Grauwert "255" zugeordnet.

Die Bildvorverarbeitungseinheit 22 verstärkt in einem Verfahrensschritt 24 den zumeist unzureichenden Kontrast des eingelesenen Bildes. In dem beschriebenen Ausführungsbeispiel wird im Verfahrensschritt 24 in weiter unten noch ausführlich dargelegter Weise ausgenützt, daß Kraftfahrzeug-Kennzeichen enthaltende Bilder im Bereich des Kennzeichens zumeist einen höheren lokalen Kontrast aufweisen als in der Umgebung des Kennzeichens.

In einem weiteren, ebenfalls von der Bildvorverarbeitungseinheit 22 durchgeführten Verfahrensschritt 26 werden in dem zu verarbeitenden Bild zusammenhängende Bildbereiche bestimmt. Von diesen Bildbereichen werden nur diejenigen Bildbereiche, deren Größe in etwa mit der Größe der zu erwartenden Zeichen übereinstimmen, zur Bestimmung ihrer Inhaltswerte in einem Verfahrensschritt 28 an den in den Personal Computer 16 eingebauten neuronalen Netzprozessor 30 übergeben. Weiter übergibt die Bildvorverarbeitungseinheit 22 dem Personal Computer 16 Angaben über die absolute Position der an den neuronalen Netzprozessor 30 weitergeleiteten Bildbereiche. Nach der Klassifikation der in den Bildbereichen enthaltenen Zeichen im Verfahrensschritt 28 übermittelt der neuronale Netzprozessor 30 dem Personal Computer 16 die Inhaltswerte der Zeichen. Der Personal Computer 16 bestimmt in einem Verfahrensschritt 32 aus den Inhaltswerten und den Positionsangaben das Kennzeichen des aufgenommenen Kraftfahrzeugs.

Zur Überwachung des Verfahrens 10 durch einen Bediener werden die von der Videokamera 18 aufgenommenen Bilder auf einem Farbmonitor 34 und die von der Vorrichtung 12 ermittelten Kennzeichen auf dem Bildschirm 36 des Personal Computer 16 dargestellt. Die einzelnen Komponenten der Vorrichtung 12 durch mit 38 bezeichnete Verbindungskabel verbunden.

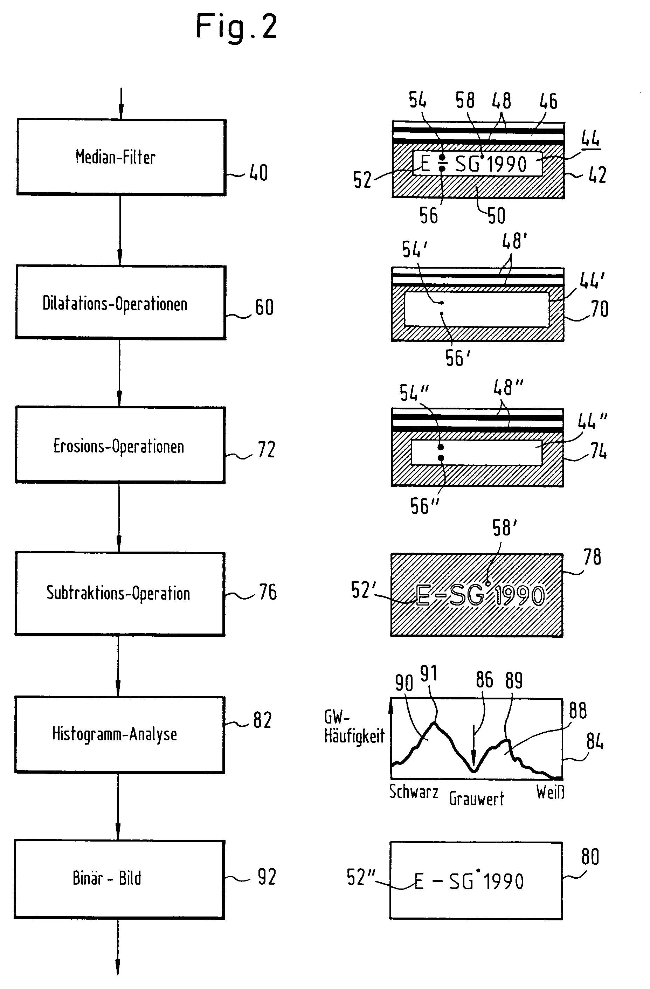

Im folgenden wird anhand von Fig. 2 der Verfahrensschritt 24, nämlich die kontrastverstärkende Bildvorverarbeitung, näher erläutert. In einem ersten Schritt 40 wird ein dem Bild bei der Video-Aufnahme überlagertes Rauschen mittels einer sogenannten Median-Filteroperation geglättet. Ergebnis dieser Operation ist das mit 42 bezeichnete und in Fig. 2 rechts oben dargestellte Ausgangsbild.

Im Ausgangsbild 42 ist die Frontpartie eines Kraftfahrzeugs schematisch dargestellt. Etwa im Zentrum des Ausgangsbilds 42 befindet sich das Kraftfahrzeug-Kennzeichen 44, welches sich durch hohen lokalen Kontrast auszeichnet. Der Kühlergrill 46 ist am oberen Bildrand des Ausgangsbilds 42 durch parallel zur Längsrichtung des Kfz-Kennzeichens 44 verlaufende und durch helle Bereiche getrennte, dunkle Streifen 48 dargestellt. Die restliche Bildfläche des Ausgangsbilds 42 wird von einer einheitlich grauen (in Fig. 2 schraffiert dargestellt) Stoßstange 50 des Kraftfahrzeugs eingenommen. Auf dem Kraftfahrzeug-Kennzeichen 44 erkennt man neben den Schriftzeichen 52 "E-SG 1990" weiterhin die ASU-Plakette 54, die Steuerplakette 56 sowie einen Schmutzfleck 58, dessen Ausdehnung kleiner ist als die Stärke der Schriftzeichen 52.

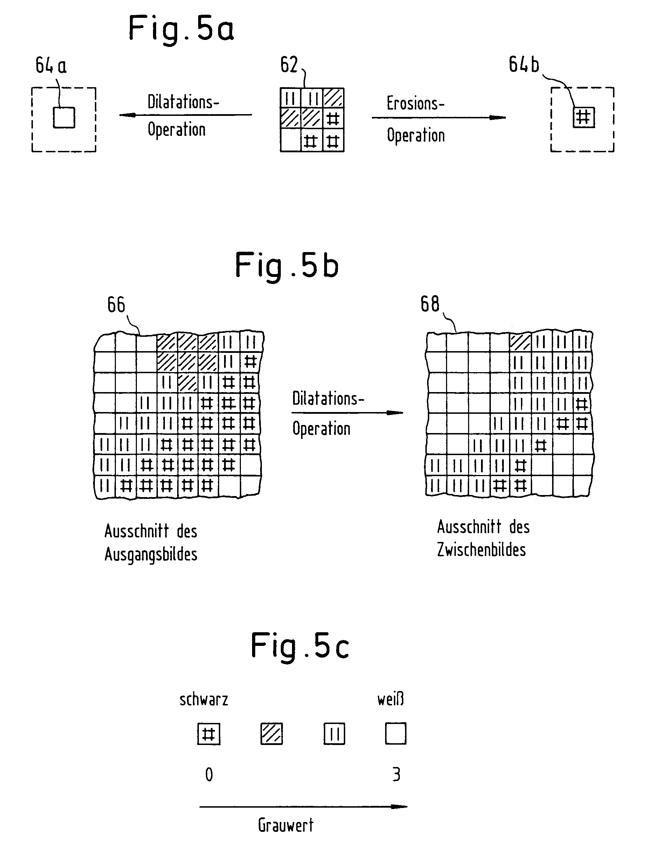

Nach der Median-Filteroperation 40 wird das digitalisierte Ausgangsbild 42 im Verfahrensschritt 60 mehreren Dilatations-Operationen unterzogen. Die Vorgehensweise bei der Bearbeitung eines digitalisierten Bildes mittels einer Dilatations-Operation wird nun anhand von Fig. 5 näher erläutert.

Der in Figur 5 verwendete Grauwert-Code ist in Fig. 5c festgelegt. Zur Vereinfachung der Darstellung umfaßt er lediglich 4 Grauwertstufen "0" bis "3". Im Verlauf einer Dilatations-Operation wird das gesamte digitalisierte Bild mit einer bspw. quadratischen und neun Bildpunkte umfassenden Maske 62 abgerastert. Sollen bei der Dilatations-Operation beispielsweise helle Bildbereiche zuungunsten dunklerer Bildbereiche vergrößert werden, so wird der Grauwert des bzw. der hellsten der in der Maske 62 enthaltenen Bildpunkte des Ausgangsbildes dem zentralen Bildpunkt 64a der Maske 62 zugeordnet und in einem Zwischenbild abgespeichert.

Beim Abrastern des Ausgangsbildes 42 bildet jeder Bildpunkt des Ausgangsbildes 42 einmal den zentralen Bildpunkt 64 der Marke 62. Hierdurch ist sichergestellt, daß durch eine Dilatation-Operation ein vollständiges Zwischenbild erstellt wird.

Fig. 5b zeigt linkerhand einen Bildausschnitt 66 des Ausgangsbilds 42 und rechterhand einen Bildausschnitt 68 eines Zwischenbilds, der durch eine Dilatations-Operation aus dem Bildausschnitt 66 des Ausgangsbilds 42 erhalten wurde. Die nächstfolgende Dilatations-Operation wird dann am Zwischenbild vorgenommen usw..

Das Ausgangsbild 42 in Fig. 2 wird im Verfahrensschritt 60 einer vorbestimmten Anzahl von Dilatations-Operationen unterzogen, deren Anzahl so bemessen ist, daß im dilatierten Bild 70 der helle Kennzeichen-Hintergrund die Schriftzeichen des Kraftfahrzeug-Kennzeichens gerade vollständig überdeckt hat. Auch der kleine Schmutzfleck 58 ist verschwunden. Man erkennt auf dem Kraftfahrzeug-Kennzeichen lediglich die Überreste der Plaketten 54 und 56. Auch gegenüber der dunklen Umgebung der Stoßstange 50 wurde der helle Kennzeichen-Hintergrund vergrößert. Die dunklen Streifen 48 des Kühlergrills 46 sind im dilatierten Bild 70 lediglich noch als dünne Streifen 48' zu erkennen.

Im Verfahrensschritt 72 wird das dilatierte Bild 70 einer vorbestimmten Anzahl von Erosions-Operationen unterzogen. Hierbei werden dunklere Bildbereiche zuungunsten hellerer Bildbereiche vergrößert. Hierzu wird das dilatierte Bild 70 mit der gleichen Maske 62 abgerastert, die bereits bei den Dilatations-Operationen verwendet wurde. Dem zentralen Bildpunkt 64b wird nun der maximale Grauwert der Bildpunkte der Maske 62 zugeordnet. In Fig. 5a ist dies der Grauwert des Bildpunkts rechts unten sowie der Bildpunkte direkt über und links neben diesem Bildpunkt.

Um dunkle Bereiche, welche durch die Dilatations-Operationen im dilatierten Bild 70 nicht aus dem Ausgangsbild 42 gelöscht wurden, wieder auf ihre ursprüngliche Größe im Ausgangsbild 42 zu bringen, ist die Anzahl der Erosions-Operationen dieselbe wie die Anzahl der Dilatations-Operationen.

Das Kraftfahrzeug-Kennzeichen 44'' im erodierten Bild 74 hat daher dieselbe Größe wie das Kennzeichen 44 im Ausgangsbild 42. Auch die Plaketten 54'' und 56'' sowie die dunklen Streifen 48'' des Kühlergrills 46 wurden wieder auf ihre Originalgröße zurückgeführt. Da die Schriftzeichen 52 und der Schmutzfleck 58 durch die Dilatations-Operationen im dilatierten Bild 70 nicht mehr vorhanden waren, können sie durch die Erosions-Operationen auch im erodierten Bild 74 nicht wieder hergestellt werden.

In einem weiteren Verfahrensschritt 76 wird nunmehr das Ausgangsbild 42 vom erodierten Bild 74 "abgezogen". Genauer gesagt werden jeweils die Grauwerte der Bildpunkte, die die gleiche absolute Position in den Bildern 74 und 42 haben, voneinander abgezogen. Da die Subtraktion von Bereichen gleicher Graustufe Grauwert "0" zur Folge hat, erscheinen alle die Bildbereiche, die im erodierten Bild 74 und im Ausgangsbild 42 gleichen Grauwert aufweisen, im subtrahierten Bild 78 als schwarz. Diese Bildbereiche (Plaketten 54", 56", Streifen 48" und Kühlergrill 46) haben im Ausgangsbild 42 Abmessungen, die die Schriftstärke der Schriftzeichen übersteigen. Unabhängig von ihren jeweiligen Grauwerten im Ausgangsbild erscheinen sie im subtrahierten Bild 78 als einheitlich schwarzer Hintergrund.

Bildbereiche, die durch die Dilatations- und Erosions-Operationen aus dem erodierten Bild 74 verschwunden waren, weisen als Grauwert die Differenz zwischen dem Grauwert der sie nun überdeckenden Bildbereiche im erodierten Bild 74 und ihrem Grauwert im Ausgangsbild 42 auf. Insbesondere werden hierdurch die Schriftzeichen 52 im subtrahierten Bild 78 als helle Bildbereiche stark hervorgehoben, da sie einen größeren lokalen Kontrast aufwiesen als ihre Umgebung. Auch der Schmutzfleck 58 erscheint im subtrahierten Bild 78 als heller Bildbereich 58'.

Den Bildpunkten des subtrahierten Bildes 78 sind nach wie vor Grauwerte zugeordnet. Um die im folgenden zu verarbeitende Datenmenge zu reduzieren, ist es vorteilhaft, das subtrahierte Grauwertbild 78 in ein binäres Bild 80 überzuführen. Hierzu wird im Verfahrensschritt 82 das subtrahierte Bild 78 einer Histogramm-Analyse unterzogen, d.h. es wird die Grauwert-Häufigkeitsverteilung der Bildpunkte des subtrahierten Bilds 78 bestimmt. Aufgrund des hohen lokalen Kontrasts der Schriftzeichen 52' gegenüber dem Hintergrund des subtrahierten Bildes 78 läßt sich in der Grauwert-Häufigkeitsverteilung 84 ein Grauwert-Schwellwert 86 festlegen, welcher den Grauwert-Bereich 88 der Schriftzeichen 52' vom Grauwert-Bereich 90 des Hintergrunds des subtrahierten Bilds 78 trennt. Erfahrungsgemäß ergibt sich dieser Grauwert-Schwellwert 86 als kleinstes relatives Minimum zwischen den beiden Hauptmaxima 89, 91 der Grauwert-Häufigkeitsverteilung 84.

Im Verfahrensschritt 92 wird nunmehr Bildpunkten, welche einen Grauwert oberhalb des Grauwert-Schwellwerts aufweisen, der Binärwert "1" und Bildpunkten, welche einen Grauwert unterhalb des Grauwert-Schwellwerts 86 aufweisen, der Binärwert "0" zugeordnet. In dem in Fig. 2 dargestellten binären Bild wurde dem Binärwert "0" die Farbe weiß und dem Binärwert "1" die Farbe schwarz zugeordnet. Mit dem Binärbild 80 hat man nunmehr bei minimaler Datenmenge ein Bild maximalen Kontrasts vorliegen.

Das beschriebene Verfahren zur Kontrastverstärkung des Ausgangsbildes zeichnet sich vor allem dadurch aus, daß im Binärbild im wesentlichen nur die Schriftzeichen des Kraftfahrzeug-Kennzeichens enthalten sind.

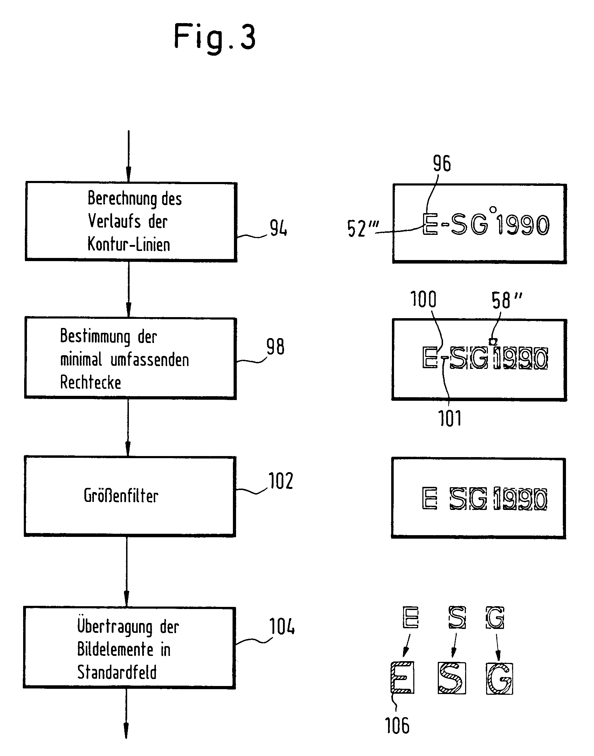

Als weiterer Hauptverfahrensschritt folgt die im folgenden anhand von Fig. 3 beschriebene Segmentierung 26 des Binärbilds 80. Der maximale Kontrast des Binärbilds 80 wird im Verfahrensschritt 94 zur Berechnung des Verlaufs geschlossener Konturlinien 96 der Schriftzeichen 52'' in Form eines sogenannten Konturketten-Codes ausgenutzt, indem man an der Grenze zwischen schwarzen und weißen Bereichen entlang fährt, bis der Ausgangspunkt wieder erreicht ist.

Aus den Konturketten-Codes der Zeichen 52'' werden im Verfahrensschritt 98 verschiedene geometrische Merkmale der Zeichen berechnet. Dies können bspw. der Schwerpunkt der Zeichen 52'', verschiedene Momente der Zeichen 52'' oder ähnliche geometrische Eigenschaften sein. Im in Fig. 3 dargestellten Verfahrensschritt 98 ist als Beispiel die Bestimmung der minimal umfassenden Rechtecke 100 der Zeichen 52'' dargestellt. Es sind dies die Recktecke minimaler Fläche, die die Konturlinie jeweils eines Zeichens ganz enthalten.

Da die in Kraftfahrzeug-Kennzeichen verwendeten Schriftzeichen eine vorbekannte Mindestausdehnung aufweisen, ist es möglich, in einem Verfahrensschritt 102 Bildelemente mit kleinerem minimal umfassendem Reckteck 100 über einen Größenfilter auszusondern. Auf diese Weise werden insbesondere kleinere Schmutzflecken 58'' von der weiteren Verarbeitung ausgeschlossen. In dem Verfahrensschritt 102 wird auch der Bindestrich 101 ausgesondert.

Im Verfahrensschritt 104 werden die übriggebliebenen Bildelemente in ein bspw. 14x9 (Höhe x Breite) Bildpunkte umfassendes Standardfeld 106 übertragen. Hierbei wird über die Höhe des jeweiligen minimal umfassenden Recktecks 100 ein Skalierungsfaktor bestimmt und Höhe und Breite entsprechend diesem Faktor skaliert. In diesem Skalierungsschritt, d.h. bei der Vergrößerung bzw. Verkleinerung der Bildelemente auf das Format des Standardfelds, wird die Auflösung der Bildelemente in Bildpunkte auf die vom Standardfeld vorgegebene Auflösung gebracht. Bildelemente, bei denen die skalierte Breite des minimal umfassenden Recktecks 100 kleiner ist als die Breite des Standardfelds 106, werden linksbündig im Standardfeld angeordnet. Außerdem wird die jeweilige Position der Bildelemente im Bild 80 bestimmt.

Die in die Standardfelder 106 übertragenen Bildelemente werden im Verfahrensschritt 28 zur Klassifikation der Zeichen, d.h. zur Bestimmung der Inhaltswerte der Bildelemente, einem neuronalen Netz 110 übergeben. Der Vorteil neuronaler Netze 110 gegenüber anderen Verfahren zur Zeichenklassifikation ist insbesondere ihre "Lernfähigkeit". Sie können in einer unten noch näher beschriebenen "Trainingsphase" in einfacher Weise an neue Verhältnisse angepaßt werden. Dies können zum einen eine neue Beobachtungsgeometrie, welche z.B. eine perspektivische Verzerrung der Kraftfahrzeug-Kennzeichen zur Folge hat, völlig neue Schriftzeichen oder ähnliche unerwartete neue Anforderungen an das Schriftzeichen-Identifizierungsverfahren sein. Darüber hinaus können die anfallenden Daten mit neuronalen Netzen 110 parallel abgearbeitet werden, was zu einer Verringerung der Klassifikationszeiten führt.

Neuronale Netze sind in ihrer Arbeitsweise einem Gehirn nachempfunden. Die einzelnen, die Informationen tragenden Zentren werden Neuronen genannt. Jedes Neuron befindet sich in einem der beiden Anregungszustände "erregt" oder "nicht erregt". Jedes der Neuronen ist mit jedem anderen Neuron über sogenannte Synapsen verbunden. Über die Synapsen können die Neuronen Einfluß auf den Anregungszustand des jeweiligen Partner-Neurons nehmen. Je stärker eine Synapse ausgebildet ist, desto höher ist die Tendenz der Neuronen, den Anregungszustand des Partner-Neurons zu beeinflussen. In einem neuronalen Netz wird die Funktion der Synapsen von den sogenannten Gewichten des neuronalen Netzes übernommen. In Zahlen ausgedrückt nehmen diese Gewichte Werte zwischen -1 und +1 an. Gewicht -1 bedeutet hierbei maximale Beeinflussung des Partnerneurons in Richtung auf verschiedene Anregungszustände hin; Gewicht 0 bedeutet, daß keine gegenseitige Beeinflussung auftritt; Gewicht +1 bedeutet maximale gegenseitige Beeinflussung in Richtung auf gleichen Anregungszustand hin. Durch die gegenseitige Beeinflussung unterliegt das Anregungsmuster des neuronalen Netzes einer gewissen Dynamik, d.h. das Anregungsmuster verändert sich mit der Zeit. Da ein Neuron nicht nur mit einem anderen Neuron, sondern mit allen anderen Neuronen verbunden ist, hängt sein Anregungszustand zu einem bestimmten Zeitpunkt von seinem ursprünglichen Anregungszustand und der mittleren Beeinflussung durch die anderen Neuronen ab. Übersteigt die mittlere Beeinflussung durch die anderen Neuronen einen bestimmten Grenzwert, so kann es geschehen, daß das beeinflußte Neuron seinen Anregungszustand ändert.

In einem Backpropagation-Netzwerk ist diese zeitliche Entwicklung der Neuronen durch mehrere aufeinanderfolgende Neuronenschichten nachempfunden. An die Neuronen der Eingangsschicht wird ein zu klassifizierendes Bildelement als Eingangsanregungsmuster angelegt. Die jeweiligen Anregungszustände der Neuronen der folgenden Schichten ergeben sich auf die vorstehend beschriebene Weise aus den Anregungszuständen der Neuronen der vorhergehenden Schicht. Beim Durchgang des Anregungsmusters durch die Schichten des neuronalen Netzes können durch die gegenseitige Beeinflussung der Neuronen fälschlicherweise erregte Neuronen in ihren nicht erregten Anregungszustand, sowie fälschlicherweise nicht erregte Neuronen in ihren erregten Anregungszustand übergeführt werden. Somit können in einem zu klassifizierenden Bildelement fehlende Bildteile ergänzt und zusätzliche Bildteile gelöscht werden. Der Anregungszustand der Neuronen der Ausgangsschicht des neuronalen Netzwerkes entspricht daher bei genügend grosser Schichtanzahl im wesentlichen dem "gelernten" Muster und kann somit in einfacher Weise einem Inhaltswert zugeordnet werden.

Ein wesentlicher Vorteil des Einsatzes neuronaler Netze liegt darin, daß die Werte der Gewichte dem neuronalen Netz nicht vorgegeben werden müssen, sondern daß das neuronale Netz während einer Trainingsphase diese Gewichte selber festlegt. Hierzu wird an der Eingangsschicht des neuronalen Netzwerkes ein Eingangsanregungsmuster angelegt und an der Ausgangsschicht dem neuronalen Netzwerk der zugehörige Inhaltswert bekanntgegeben. Das neuronale Netz bestimmt über einen Lernalgorithmus für jedes Paar von Neuronen aus diesen Informationen und dem alten Wert des Gewichts dieses Neuronenpaars einen neuen Wert des Gewichts. Das "Wissen" des neuronalen Netzes ist also in den Gewichten gespeichert und kann in Zuammenarbeit mit einem Trainer "erlernt" werden.

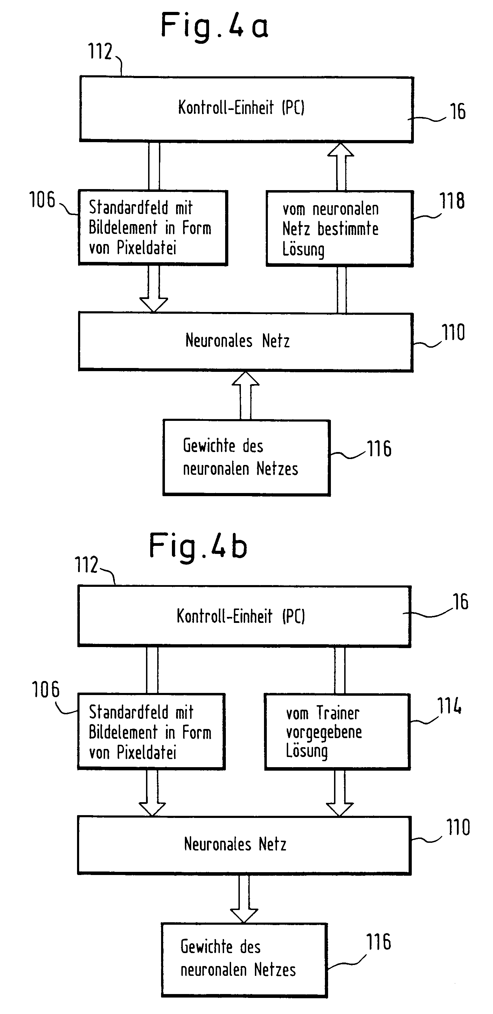

In Fig. 4 ist die Arbeitsweise eines neuronalen Netzes 110 während der Trainingsphase (Fig. 4b) und der Erkennungsphase (Fig. 4a) grob schematisch dargestellt. Während der Trainingsphase werden dem neuronalen Netz 110 von der bspw. von einem PC 16 gebildeten Kontrolleinheit 112 nacheinander mehrere in Standardfelder 106 übertragene Bildelemente in Form von Pixeldateien übergeben. Außerdem werden dem neuronalen Netz 110 über die Tastatur 14 des PCs 16 von einem Trainer die Inhaltswerte der Zeichen als Lösung 114 vorgegeben. Über einen Lernalgorithmus bestimmt das neuronale Netz 110 hieraus die sein "Wissen" repräsentierenden Parameter 116, die sog. Gewichte des neuronalen Netzes. Die Trainingsphase eines neuronalen Netzes 110 beträgt typischerweise nur einige Stunden.

Während der Erkennungsphase werden dem neuronalen Netz 110 von der Kontrolleinheit 112 die von der Bildvorverarbeitungseinheit 22 aus dem Ausgangsbild 42 bestimmten und in Standardfelder 106 übertragenen Bildelemente in Form von Pixeldateien übergeben. Das neuronale Netz 110 benutzt nunmehr sein in der Trainingsphase aufgebautes Wissen, um aus dem Inhalt der Pixeldateien jeweils die zu den Bildelementen gehörenden Inhaltswerte zu bestimmen. Diese Inhaltswerte übergibt das neuronale Netz 110 dann der Kontrolleinheit 112 als Lösung 118. Die Kontrolleinheit 112 setzt aus den Inhaltwerten unter Verwendung der Positionsinformation des dem jeweiligen Inhaltswert zugeordneten Bildelements das Kraftfahrzeug-Kennzeichen zusammen. Der im Verfahrensschritt 102 unterdrückte Bindestrich 101 wird zwischen den beiden benachbarten Zeichen ergänzt, die den größten Abstand voneinander aufweisen.

Sollte es sich herausstellen, daß das Verfahren wider Erwarten Schwierigkeiten hat, bestimmte Zeichen zu identifizieren, so können diese in einer erneuten Trainingsphase "nachgeübt" werden.

Das beschriebene Verfahren kann ohne weiteres auch Kraftfahrzeug-Kennzeichen aus Ländern identifizieren, in denen Kraftfahrzeug-Kennzeichen mit hellen Schriftzeichen auf dunklem Grund verwendet werden, wie dies bspw. in Frankreich, Österreich oder Polen der Fall ist. Hierzu ist es lediglich nötig, als Dilatations-Operation dunkle Bildbereiche zuungunsten hellerer Bildbereiche und anschließend als Erosions-Operation hellere Bildbereiche zuungunsten dunklerer Bildbereiche zu erweitern. Welche Reihenfolge der Erweiterung heller und dunkler Bildbereiche zu verwenden ist, kann aufgrund der am häufgisten zu erwartenden Kraftfahrzeug-Kennzeichen vorbestimmt werden. Sollte der Versuch einer Identifizierung eines Kraftfahrzeug-Kennzeichens einmal fehlschlagen, so kann die Reihenfolge der Erweiterung heller und dunkler Bildbereiche umgekehrt werden und somit überprüft werden, ob es sich um ein derartiges ausländisches Kennzeichen handelt.

Das beschriebene Verfahren zur Identifizierung von Zeichenketten zeichnet sich vor allem dadurch aus, daß die Position der Zeichenketten im Bild durch die kontrastverstärkende Vorverarbeitung in einfacher Weise lokalisiert werden können. Darüber hinaus werden kleinere Störungen auf den Zeichenketten, wie bspw. bei Kraftfahrzeug-Kennzeichen Verschmutzungen durch Insekten, mit großer Sicherheit von der weiteren Verarbeitung ausgeschlossen. Durch die insgesamt erzielte hohe Bildqualität verkürzen sich die Verarbeitungszeiten bei der Zeichenklassifikation beträchtlich.

Insbesondere beim Einsatz des Verfahrens zur Identifizierung von Kraftfahrzeug-Kennzeichen hat sich bei der Klassifikation der Zeichen die Verwendung neuronaler Netzwerke als günstig erwiesen. Diese ermöglichen eine einfache Anpassung an wechselnde Beobachtungsgeometrien sowie einfache Erweiterung um neue Zeichen oder Zeichensätze. Durch die Parallelisierung der Verarbeitung zeichnen sich neuronale Netzwerke bei der Klassifikation von Zeichen gegenüber anderen Klassifikationsverfahren durch kurze Auswertzeiten aus. Sie verfügen darüber hinaus über eine hohe Klassifikationssicherheit.

Neben der Anwendung des Verfahrens zum Erkennen von Kraftfahrzeug-Kennzeichen, sei es in der genannten Parkhaus-Abfertigungsanlage, an Mautstellen oder sonstigen Anwendungsgebieten, kann das Verfahren überall dort eingesetzt werden, wo es darum geht, standardisierte Zeichen zu erkennen. Dies kann bspw. ein System sein, welches einen Kraftfahrzeug-Lenker darin unterstützt, die immer größer werdende Menge von Verkehrszeichen zu bewältigen. Eine andere Anwendungsmöglichkeit ist das Lesen von Container-Beschriftungen, um eine bessere Automatisierung der Koordination des Frachtverkehrs zu ermöglichen.

**Patentansprüche**

1. Verfahren zur Identifizierung von aus standardisierten Zeichen zusammengesetzten Zeichenketten, dadurch **gekennzeichnet,** daß es folgende Schritte umfaßt:

   a) digitale Erfassung (20) eines Ausgangsbildes (42), welches die Zeichenkette enthält;

   b) Bearbeitung (24) des Ausgangsbildes (42) mit Hilfe von kontrastverstärkenden Operationen;

   c) Ermitteln (26) von Bildbereichen, die jeweils nur ein einzelnes Zeichen enthalten;

   d) Bestimmung (28) von Inhaltswerten, welche den in den einzelnen Bildbereichen enthaltenen Zeichen entsprechen; und

   e) Aufbau (32) einer Inhaltswertekette gemäß der Position der zu den Inhaltswerten gehörenden Bildbereiche innerhalb des Bildes.

2. Verfahren nach Anspruch 1, dadurch **gekennzeichnet,** daß im Schritt b) das Ausgangsbild gefiltert wird, vorzugsweise mittels Median-Filteroperation (40).

3. Verfahren nach Anspruch 1 oder 2, dadurch **gekennzeichnet,** daß im Schritt b) das ggf. gefilterte Ausgangsbild (42) wenigstens einer Dilatations-Operation (60) unterzogen wird, bei der im Falle dunkler Zeichen auf hellem Hintergrund hellere Bildbereiche zuungunsten dunklerer Bildbereiche vergrößert werden und im Falle heller Zeichen auf dunklem Grund dunklere Bildbereiche zuungunsten hellerer Bildbereiche vergrößert werden und die Anzahl der Dilatations-Operationen (60) derart festgelegt ist, daß nach Durchführung dieser Dilatations-Operationen (60) die Zeichen im dilatierten Bild (70) gerade verschwunden sind, daß das dilatierte Bild (70) wenigstens einer Erosions-Operation (72) unterzogen wird, bei der die bei der Dilatations-Operation (60) verkleinerten Bildbereiche zuungunsten der bei der Dilatations-Operation (60) vergrößerten Bildbereiche vergrößert werden und die Anzahl der Erosions-Operationen (72) derart festgelegt ist, daß im dilatierten Bild (70) übriggebliebene Bildelemente nach den Erosions-Operationen (72) im erodierten Bild (74) eine Ausdehnung aufweisen, die ihrer Ausdehnung im Ausgangsbild (42) entspricht, und daß zur Bildung eines Subtraktions-Bildes (78) in einer Subtraktions-Operation (76) das erodierte Bild (74) vom Ausgangsbild (42) abgezogen wird.

4. Verfahren nach wenigstens einem der Ansprüche 1-3, dadurch **gekennzeichnet, daß** im Schritt b) eine Grauwert-Häufigkeitsverteilung (84) des zu bearbeitenden Bildes bestimmt wird, daß ein Grauwert-Schwellwert (86) in Abhängigkeit von der bestimmten Grauwert-Häufigkeitsverteilung (84) festgelegt wird, daß aus dem zu bearbeitenden Bild ein binäres Bild (80) erhalten wird, indem denjenigen Bildpunkten des zu bearbeitenden Bildes mit Grauwert unterhalb des Schwellwerts (86) der Binärwert "0" und denjenigen Bildpunkten des zu bearbeitenden Bildes mit Grauwert oberhalb des Schwellwerts (86) der Binärwert "1" zugeordnet wird.

5. Verfahren nach Anspruch 4, dadurch **gekennzeichnet, daß** als Grauwert-Schwellwert (86) der einem relativen Häufigkeitsminimum der Grauwert-Häufigkeitsverteilung (84) zugeordnete Grauwert bestimmt wird.

6. Verfahren nach Anspruch 5, dadurch **gekennzeichnet, daß** als das den Grauwert-Schwellwert (86) festlegende relative Häufigkeitsminimum der Grauwert-Häufigkeitsverteilung (84) das kleinste relative Häufigkeitsminimum zwischen zwei Hauptmaxima (89, 91) der Grauwert-Häufigkeitsverteilung (84) bestimmt wird.

7. Verfahren nach wenigstens einem der vorhergehenden Ansprüche, dadurch **gekennzeichnet, daß** im Schritt c) der Verlauf der Konturlinie (96) jedes Bildelements im zu bearbeitenden Bild festgestellt wird.

8. Verfahren nach Anspruch 7, dadurch **gekennzeichnet, daß** für jedes Bildelement ein, insbesondere rechteckiges, Bildfeld (100) vorgegebener Orientierung und mit minimaler Fläche bestimmt wird, in welchem die jeweilige Konturlinie (96) vollständig liegt.

9. Verfahren nach Anspruch 8, dadurch **gekennzeichnet, daß** wenigstens ein maximaler Bildfeld-Dimensionsgrenzwert und/oder wenigstens ein minimaler Bildfeld-Dimensionsgrenzwert festgelegt werden und daß Bildelemente mit Bildfeld-Dimensionswerten oberhalb des maximalen Bildfeld-Dimensionsgrenzwerts bzw. Bildelemente mit Bildfeld-Dimensionswerten unterhalb des minimalen Bildfeld-Dimensionsgrenzwerts nicht weiterverarbeitet werden.

10. Verfahren nach Anspruch 7 oder 8, dadurch **gekennzeichnet, daß** man die Bildfelder (100) vergrößert oder verkleinert, daß der Wert einer vorgegebenen Dimension, vorzugsweise die Höhe des Bildfeldes (100), einem entsprechenden Wert eines Standardfeldes (106) entspricht und vorzugsweise eine Auflösung der Bildfelder (100) in Bildpunkte entsprechend der Verkleinerung oder Vergrößerung auf eine vorgegebene Auflösung gebracht wird.

11. Verfahren nach Anspruch 10, dadurch **gekennzeichnet, daß** man das Bildelement im Standardfeld (106) an einer vorbestimmten Position, insbesondere rechts- oder linksbündig, anordnet.

12. Verfahren nach einem der vorhergehenden Ansprüche, dadurch **gekennzeichnet, daß** man im Schritt d) ein neuronales Netzwerk (110) einsetzt, welches dadurch an die zu verarbeitenden Zeichenketten angepaßt wird, daß man der Reihe nach eine Vielzahl von bekannten Zeichenketten nach Durchführung der Schritte a) bis c) (20, 24, 26) dem neuronalen Netzwerk (110) als Eingangssignalmuster eingibt und gleichzeitig dem neuronalen Netzwerk (110) die jeweiligen Inhaltswerte als Soll-Ausgangssignalmuster eingibt.

13. Verfahren nach Anspruch 12, dadurch **gekennzeichnet, daß** als neuronales Netzwerk (110) ein "back-propagation"-Netzwerk eingesetzt wird.

14. Anwendung des Verfahrens nach wenigstens einem der vorhergehenden Ansprüche zur Identifizierung von Kraftfahrzeugkennzeichen (44).

15. Anwendung nach Anspruch 14, dadurch **gekennzeichnet, daß** das Verfahren in einem Abfertigungssystem für Parkhäuser eingesetzt wird.

16. Vorrichtung zur Durchführung des Verfahrens nach wenigstens einem der Ansprüche 1-13, **gekennzeichnet** durch

A) ein Bildaufnahmegerät (18), vorzugsweise Video-Kamera;

B) eine Bildverarbeitungseinheit (22);

C) eine Zeichenklassifizierungseinheit (30); und

D) eine Kontrolleinheit (16) zur Steuerung des Bildaufnahmegeräts (18), der Bildverarbeitungseinheit (22) und der Zeichenklassifikationseinheit (30).

17. Vorrichtung nach Anspruch 16, dadurch **gekennzeichnet,** daß das Bildaufnahmegerät (18) eine CCD-Kamera ist.

18. Vorrichtung nach Anspruch 16 oder 17, dadurch **gekennzeichnet,** daß die Zeichenklassifizierungseinheit (30) ein neuronales Netzwerk (110) umfaßt.

19. Verfahren nach einem der Ansprüche 16-18, dadurch **gekennzeichnet,** daß die Kontrolleinheit einen Personal Computer (16) umfaßt.

20. Vorrichtung nach Anspruch 16, **gekennzeichnet** durch einen an das Bildaufnahmegerät (18) und/oder die Kontrolleinheit (16) angeschlossenen Monitor (34).

# Fig.1

10

```
┌─────────────────────┐
│   digitales Einlesen │ ─ 20
│  des die Zeichenkette│
│  enthaltenden Bildes │
└─────────────────────┘
          │
          ▼
┌─────────────────────┐
│ kontrast-verstärkende│ ─ 24
│  Bild-Vorverarbeitung│
└─────────────────────┘
          │
          ▼
┌─────────────────────┐
│    Segmentierung     │ ─ 26
└─────────────────────┘
          │
          ▼
┌─────────────────────┐
│     Bestimmung       │ ─ 28
│        der           │
│     Inhaltswerte     │
└─────────────────────┘
          │
          ▼
┌─────────────────────┐
│    Bildung der       │ ─ 32
│  Inhaltswertekette   │
└─────────────────────┘
```

# Fig.2

Median-Filter — 40

Dilatations-Operationen — 60

Erosions-Operationen — 72

Subtraktions-Operation — 76

Histogramm-Analyse — 82

Binär – Bild — 92

54  58  48  46

44

52  E = SG 1990

56  50  42

54'  48'

44'

70

56'

54''  48''

44''

74

56''

58'

78

52'  E-SG 1990

GW-
Häufigkeit

90  91  86  89

88

84

Schwarz  Grauwert  Weiß

52''  E – SG 1990  80

# Fig.3

## Fig.4a

112

| Kontroll-Einheit (PC) | 16 |

106 — Standardfeld mit Bildelement in Form von Pixeldatei

vom neuronalen Netz bestimmte Lösung — 118

Neuronales Netz — 110

Gewichte des neuronalen Netzes — 116

## Fig.4b

112

| Kontroll-Einheit (PC) | 16 |

106 — Standardfeld mit Bildelement in Form von Pixeldatei

vom Trainer vorgegebene Lösung — 114

Neuronales Netz — 110

Gewichte des neuronalen Netzes — 116

# Fig.5a

64a

← Dilatations-
Operation

62

Erosions-
Operation →

64b

# Fig.5b

66

Dilatations-
Operation →

68

Ausschnitt des
Ausgangsbildes

Ausschnitt des
Zwischenbildes

# Fig.5c

schwarz                    weiß

| 0 |  |  | 3 |

Grauwert →

# Fig.6